# EUROPÄISCHE PATENTSCHRIFT

(11) **EP 3 592 610 B1**
(45) Veröffentlichungstag und Bekanntmachung des Hinweises auf die Patenterteilung: **26.01.2022**
(21) Anmeldenummer: 18723417.4
(22) Anmeldetag: 20.04.2018
(51) Int. Cl.: B60R 16/02

(54) **AUFNAHMEEINRICHTUNG FÜR LEITUNGSELEMENTE IN EINER DURCHFÜHRUNG EINES FAHRZEUGS**
RECEIVING DEVICE FOR CONDUCTION ELEMENTS IN A DUCT OF A VEHICLE
DISPOSITIF DE RÉCEPTION POUR ÉLÉMENTS DE LIGNE DANS UNE TRAVERSÉE DE VÉHICULE

(30) Priorität: 27.04.2017 DE 102017207122
(43) Veröffentlichungstag der Anmeldung: 15.01.2020
(73) Patentinhaber: Siemens Mobility GmbH, 81739 München (DE)
(72) Erfinder: REISS, Gerhard, 47802 Krefeld (DE)
(86) Internationale Anmeldenummer: PCT/EP2018/060135
(87) Internationale Veröffentlichungsnummer: WO 2018/197348

(56) Entgegenhaltungen:
- WO-A1-2004/042744
- CN-Y- 2 817 149
- DE-A1- 2 845 461
- JP-A- 2006 269 201
- US-A1- 2015 020 911

## Beschreibung

Die Erfindung bezieht sich auf ein Schienenfahrzeug mit zumindest einem Bauelement welches als Querträger ausgestaltet ist, der sich auf einem Drehgestell des Schienenfahrzeugs abstützt und zumindest eine Durchführung aufweist wobei in der zumindest eine Durchführung eine Einrichtung zur Aufnahme von zumindest zwei Leitungselementen angeordnet ist.

Bei der Führung von Leitungselementen durch Durchführungen von Bauelementen können je nach Dimensionierung thermische Probleme auftreten. Handelt es sich bei den Leitungselementen beispielsweise um elektrische Leiter eines Kabels, durch die hohe Ströme fließen, so entstehen Verlustleistungen, die zu einem Anstieg der Kabeltemperaturen führen können. Das einen Leiter umhüllende Isoliermaterial hat in der Regel einen nur niedrigen Wärmeleitkoeffizienten, was eine Abgabe der in dem Kabel erzeugten Wärme an die Umgebung erschwert. In Kabelbündeln kann der Temperaturanstieg besonders groß ausfallen, weil benachbarte Kabel bzw. Kabelisolierungen eine zusätzliche Wärmeisolierung darstellen. In engen Durchführungen durch Bauelemente kann sich dieses Problem zudem weiter verschärfen.

Handelt es sich bei dem Bauelement um ein tragendes Bauelement, insbesondere ein Bauelement eines Fahrzeugs, so werden Durchführungen bezüglich ihres Querschnitts in der Regel möglichst klein gewählt werden, um die mechanische Stabilität des Bauelements nicht zu beeinträchtigen.

Der Erfindung liegt die Aufgabe zugrunde, im Bereich einer Durchführung eine bessere Wärmeabfuhr von Wärme, die von den Leitungselementen abgegeben wird, zu erzielen. Diese Aufgabe wird erfindungsgemäß durch eine Einrichtung mit den Merkmalen gemäß dem unabhängigen Patentanspruch gelöst. Ferner wird die

Aufgabe durch die Merkmale eines Schienenfahrzeugs mit den Merkmalen der nebengeordneten Patentansprüche gelöst. Vorteilhafte Ausgestaltungen der erfindungsgemäßen Einrichtung sind in jeweiligen abhängigen Patentansprüchen angegeben.

Gemäß einem ersten Aspekt der Erfindung weist eine Einrichtung zur Aufnahme von zumindest zwei Leitungselementen in einer Durchführung eines Fahrzeugs zumindest ein Trennelement aus einem wärmeleitenden Material auf, durch das die zumindest zwei Leitungselemente voneinander getrennt werden.

Ein wesentlicher Vorteil der erfindungsgemäßen Einrichtung ist darin zu sehen, dass durch das oder die wärmeleitenden Trennelemente eine zusätzliche Wärmeabfuhr in Leitungslängsrichtung und damit aus der Durchführung heraus erreicht wird. Zudem wird in vorteilhafter Weise eine thermische Entkopplung zwischen den Leitungselementen erreicht, wobei die thermische Entkopplung insbesondere verhindern kann, dass ein besonders stark erwärmtes bzw. heißes Leitungselement ein benachbartes anderes Leitungselement aufheizt, wodurch dessen Isolation womöglich beschädigt wird.

Gemäß einer ersten Weiterbildung des ersten Aspekts der Erfindung sind die Leitungselemente elektrische Kabel mit jeweils zumindest einem elektrischen Leiter. Alternativ kann es sich bei den Leitungselementen jedoch auch um Fluidleitungen bzw. um eine Kombination aus elektrischen Kabel und Leitungen für einen Fluidtransport handeln.

Gemäß der Erfindung ist die Durchführung eine Durchführung eines Bauelements des Schienenfahrzeugs. Das Bauelement erfüllt dabei eine weitere Funktion, als ein Querträger des Fahrzeugs. Das Bauelement besteht erfindungsgemäß aus einem wärmeleitenden Material.

Gemäß der Erfindung wird ein Leitungsbündel bestehend aus einer Mehrzahl Leitungselemente durch die Durchführung geführt, wobei jedes der Leitungselemente des Leitungsbündels von jedem anderen Leitungselement durch zumindest ein Trennelement getrennt ist.

Gemäß einer Ausgestaltung der zweiten Weiterbildung weist die Einrichtung zumindest ein Distanzelement aus einem wärmeleitenden Material für einen Wärmetransport von der Einrichtung in das Bauelement auf, wobei das zumindest eine Distanzelement zwischen der Einrichtung und einer Innenwand der Durchführung angeordnet ist.

Mit Blick auf eine gute Wärmeabfuhr radial nach außen, also quer oder senkrecht zur Leitungslängsrichtung bzw. quer oder senkrecht zur Längsrichtung der Durchführung, wird zwischen der Einrichtung und der Innenwand der Durchführung mindestens ein solches wärmeleitendes Distanzelement positioniert, insbesondere eingeklemmt, welches einen radialen Wärmefluss von der Einrichtung über die Innenwand der Durchführung in das Bauelement ermöglicht.

Gemäß der Erfindung ist jedes Trennelement wärmeleitend mit dem zumindest einen Distanzelement gekoppelt. Dabei kann die Kopplung unmittelbar, mittelbar über zumindest ein anderes Trennelement, mittelbar über eine Außenwand der Einrichtung, oder mittelbar über eine Außenwand der Einrichtung und zumindest ein anderes Trennelement (32) erfolgen.

Gemäß einer weiteren Weiterbildung der Erfindung weist die Einrichtung eine Mehrzahl Aufnahmeabschnitte für eine jeweilige Aufnahme eines Leitungselements beispielsweise eines Leitungsbündels auf, wobei ein Aufnahmeabschnitt von jedem anderen Aufnahmeabschnitt durch jeweils mindestens ein Trennelement getrennt ist.

Gemäß einer weiteren Weiterbildung der Erfindung gemäß erstem Aspekt ist die Einrichtung ein Strangpressprofilelement, dessen Strangpressrichtung parallel zu einer Längsrichtung der Durchführung ausgerichtet ist. Dabei besteht das Strangpressprofilelement vorzugsweise aus einem Metall, einer Metalllegierung oder einem metallhaltigen Material. Beispielsweise wird das Strangpressprofilelement in die Durchführung eingeschoben.

Ein Vorteil des erfindungsgemäßen Bauelements besteht darin, dass im Falle eines Einsatzes des Bauelements als tragendes Bauelement in einem Schienenfahrzeug, die Durchführung vom Querschnitt her besonders klein ausgeführt werden kann, weil etwaige thermische Probleme durch Erwärmung innerhalb der Durchführung durch die erfindungsgemäße Einrichtung mit den wärmeleitenden Trennelementen zumindest reduziert werden können.

Gemäß der Erfindung stützt sich der Querträger auf einem Drehgestell des Schienenfahrzeugs ab.

Gemäß einer wiederum auf der zweiten Weiterbildung aufbauenden dritten Weiterbildung erstreckt sich die Durchführung in einer Längsrichtung des Fahrzeugs, wobei sich die durch die Durchführung geführten Leitungselemente von einem vor dem Fahrgestell befindlichen Abschnitt des Fahrzeugs, insbesondere von einem vor dem Fahrgestell befindlichen Abschnitt einer Unterseite eines Wagenkastens des Fahrzeugs, durch die Durchführung in einen hinter dem Fahrgestell befindlichen Abschnitt des Fahrzeugs, insbesondere in einen hinter dem Fahrgestell befindlichen Abschnitt der Unterseite des Wagenkastens, erstrecken.

Die Erfindung wird nachfolgend anhand von Ausführungsbeispielen näher erläutert. Dabei zeigen
- FIG 1: ein erfindungsgemäßes Schienenfahrzeug mit dem Bauelement, in einer perspektivischen Ansicht einer Querschnittdarstellung,
- FIG 2: das Bauelement gemäß FIG 1 in einer Detaildarstellung,
- FIG 3: das Schienenfahrzeug gemäß den Figuren 1 und 2 in einer Querschnittdarstellung von der Seite,
- FIG 4: eine in einer Durchführung des Bauelements gemäß den Figuren 1 bis 3 angeordnete Aufnahmeeinrichtung mit Trennelementen und eingelegten Leitungselementen,
- FIG 5: Wärmeleitkörper der Aufnahmeeinrichtung gemäß FIG 4 in einer Detailansicht,
- FIG 6: eine weitere in einer Durchführung des Bauelements gemäß den Figuren 1 bis 3 angeordnete Aufnahmeeinrichtung,
- FIG 7: Wärmeleitkörper der Aufnahmeeinrichtung gemäß FIG 6 in einer Detailansicht,
- FIG 8: eine weitere Aufnahmeeinrichtung zur Aufnahme von Leitungselementen, und
- FIG 9-11: weitere Aufnahmeeinrichtungen mit wellplattenartigen Elementen.

In den Figuren werden der Übersicht halber für identische oder vergleichbare Komponenten stets dieselben Bezugszeichen verwendet.

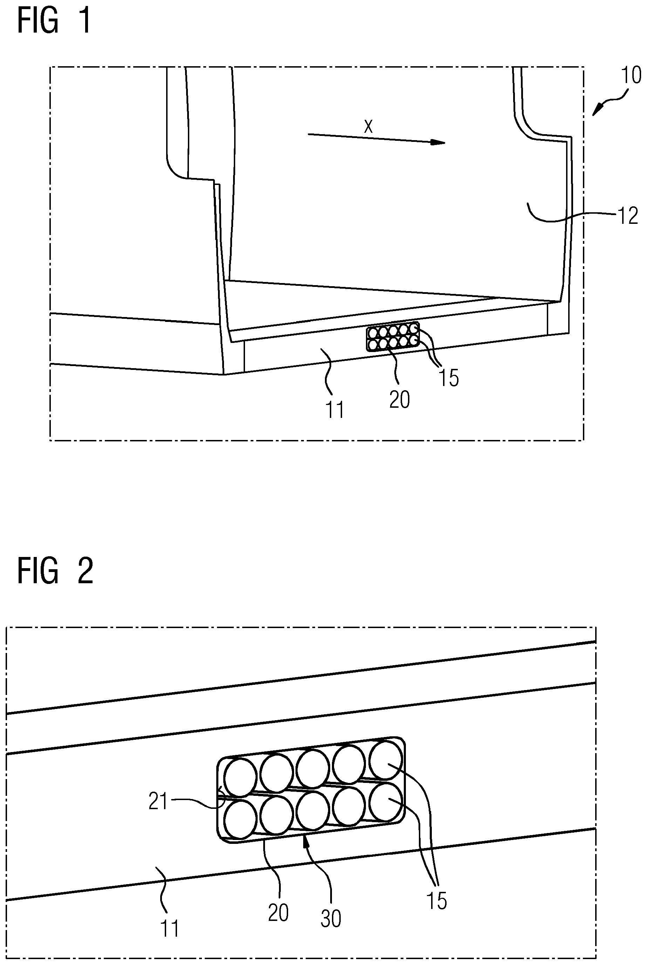

Die FIG 1 zeigt in einer aufgeschnittenen Darstellung schräg von der Seite einen Abschnitt eines Schienenfahrzeugs 10. Das Schienenfahrzeug 10 weist ein Bauelement 11 in Form eines Querträgers auf, der zum Abstützen eines Wagenkastens 12 auf einem in der FIG 1 nicht gezeigten Drehgestell des Schienenfahrzeugs 10 dient. Zum Durchführen von Leitungselementen 15 durch den Querträger 11 hindurch entlang der Fahrzeuglängsrichtung X ist das Bauelement 11 mit einer Durchführung 20 versehen, die sich entlang der Fahrzeuglängsrichtung X erstreckt.

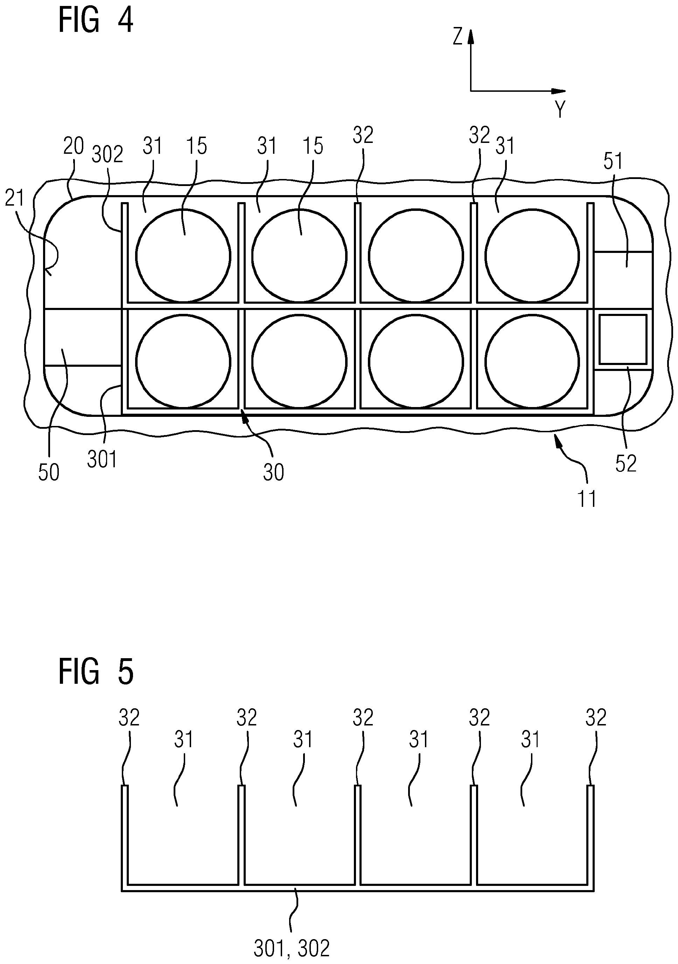

Die FIG 2 zeigt die Durchführung 20 des Querträgers 11 gemäß FIG 1 näher im Detail. Es lässt sich erkennen, dass in die Durchführung 20 eine Einrichtung 30 eingesetzt ist, die vorzugsweise mit der Innenwand 21 der Durchführung mittelbar oder unmittelbar verbunden oder zumindest mittelbar oder unmittelbar wärmetechnisch mit dieser gekoppelt ist. Die Einrichtung 30 wird nachfolgend als Aufnahmeeinrichtung 30 bezeichnet. Die Aufnahmeeinrichtung 30 dient zum Einlegen der Leitungselemente 15 und umfasst vorzugsweise ein oder mehrere wärmeleitende Trennelemente, die jeweils zumindest eines der Leitungselemente 15 von zumindest einem anderen der Leitungselemente 15 trennen. Ausführungsbeispiele für bevorzugte Aufnahmeeinrichtungen 30 werden weiter unten im Zusammenhang mit den Figuren 4 bis 11 erläutert.

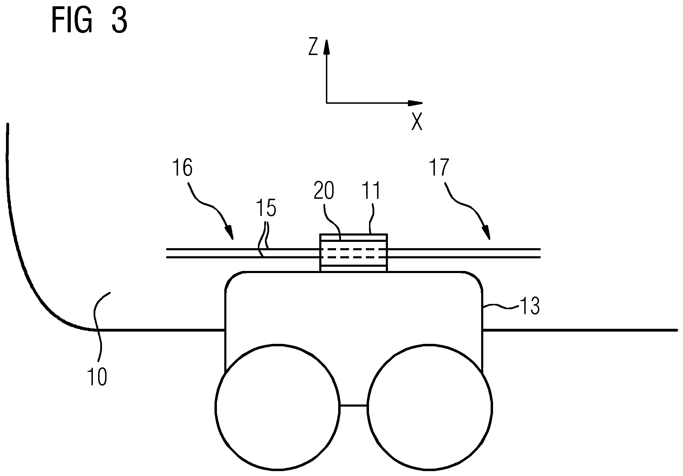

Die FIG 3 zeigt das Schienenfahrzeug 10 gemäß den Figuren 1 und 2 in einem Querschnitt von der Seite betrachtet. Man erkennt den Querträger 11, der sich auf dem Drehgestell 13 vertikal in Z-Richtung abstützt und die Durchführung 20 zum Durchführen der Leitungselemente 15 aufweist. Die FIG 3 zeigt, dass sich die Durchführung 20 in Fahrzeuglängsrichtung X erstreckt, so dass durch die Durchführung 20 hindurchgeführte Leitungselemente 15 in Fahrzeuglängsrichtung X gesehen von einem vor dem Drehgestell 13 befindlichen Abschnitt 16 des Schienenfahrzeugs 10 durch die Durchführung 20 hindurch in einen hinter dem Drehgestell 13 befindlichen Abschnitt 17 des Schienenfahrzeugs 10 gelangen können.

Die FIG 4 zeigt ein Ausführungsbeispiel für eine Aufnahmeeinrichtung 30, die zur Aufnahme der Leitungselemente 15 geeignet ist. Die Aufnahmeeinrichtung 30 wird durch zwei Wärmeleitkörper 301 und 302 gebildet, die übereinander gestapelt sind. Der in der FIG 4 untere Wärmeleitkörper 301 liegt auf der Innenwand 21 der Durchführung 20 auf und ist somit großflächig mit dem Querträger 11 wärmestrommäßig in Z-Richtung gekoppelt.

Um auch in Fahrzeugquerrichtung Y einen Wärmefluss radial nach außen zu ermöglichen, ist die Aufnahmeeinrichtung 30 bei der Erfindung gemäß FIG 4 seitlich mittels wärmeleitender Distanzelemente 50, 51 und 52 in der Durchführung 20 eingeklemmt. Die wärmeleitenden Distanzelemente 50, 51 und 52 unterstützen somit den radialen Wärmefluss in den Querträger 11.

Die Aufnahmeeinrichtung 30 bzw. die Wärmeleitkörper 301 und 302 bilden Aufnahmeabschnitte 31 zum individuellen Einlegen der Leitungselemente 15. Zu diesem Zweck ist die Aufnahmeeinrichtung 30 mit Trennelementen 32 ausgestattet, die die Aufnahmeabschnitte 31 und damit die darin eingelegten Leitungselemente 15 voneinander trennen. Die Trennelemente 32 sind vorzugsweise gut wärmeleitend. Vorteilhaft ist es, wenn die Trennelemente 32 aus Metall, einer Legierung oder einem metallhaltigen Material bestehen.

Durch das Aufliegen der Aufnahmeeinrichtung 30 auf der unteren Innenwand 21, durch die radiale seitliche Wärmeabfuhr durch die Distanzelemente 50, 51 und 52 hindurch sowie durch die Trennelemente 32, die eine individuelle Wärmeabfuhr der Wärme jedes einzelnen Leitungselements 15 über die Innenwand 21 in den Querträger 11 ermöglichen, wird eine optimale Entwärmung der Leitungselemente 15 innerhalb der Durchführung 20 erreicht. Durch die Trennung der Leitungselemente 15 untereinander wird darüber hinaus vermieden, dass besonders heiße Leitungselemente benachbarte Leitungselemente signifikant aufheizen können, weil die Trennelemente 32 die Wärme abführen.

Bei den Leitungselementen 15 kann es sich um elektrische Kabel oder auch um Fluidleitungen oder dergleichen handeln. Insbesondere bei mit hohen Strömen durchflossenen elektrischen Leitungen besteht das Problem einer signifikanten Erwärmung im Bereich der aus Stabilitätsgründen vom Querschnitt relativ kleinen Durchführung 20; dieses Problem wird durch die Trennelemente deutlich reduziert.

Die FIG 5 zeigt die Wärmeleitkörper 301 und 302, die die Aufnahmeeinrichtung 30 bei der Ausführungsvariante gemäß FIG 4 bilden, näher im Detail. Man erkennt die Trennelemente 32, durch die die Aufnahmeabschnitte 31 bei der Aufnahmeeinrichtung 30 gebildet werden.

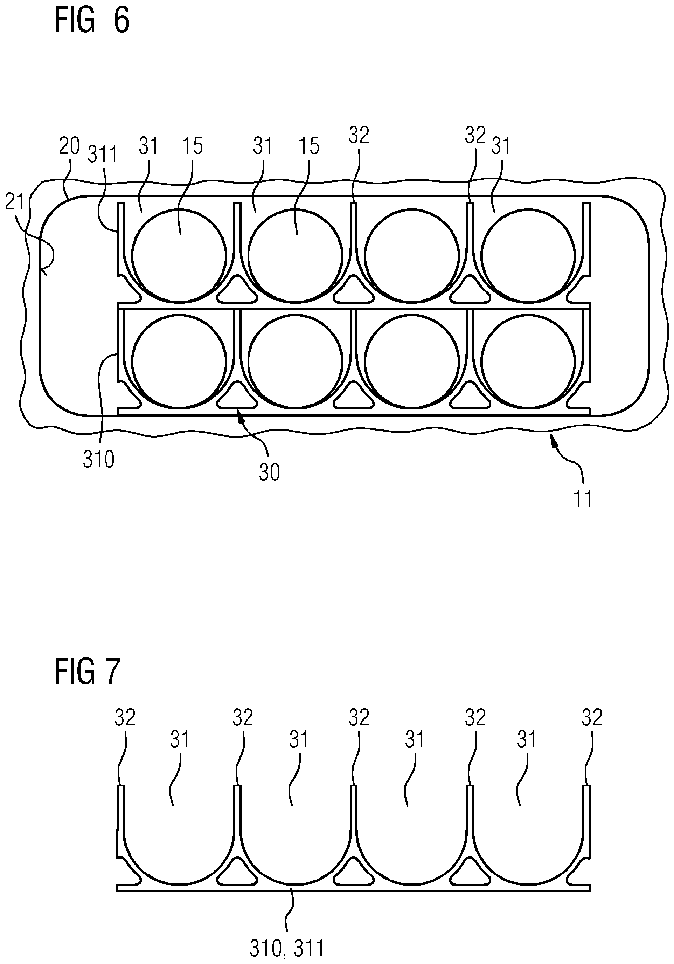

Die FIG 6 zeigt ein weiteres Ausführungsbeispiel für eine Aufnahmeeinrichtung 30, die in der Durchführung 20 gemäß den Figuren 1 bis 3 eingesetzt werden kann. Die Aufnahmeeinrichtung 30 gemäß FIG 6 wird durch zwei Wärmeleitkörper 310 und 311 gebildet, die übereinander gestapelt sind. Der in der FIG 6 untere Wärmeleitkörper 310 liegt großflächig auf der unteren Innenwand 21 der Durchführung 20 auf, so dass eine Wärmeabfuhr in vertikaler Richtung nach unten ermöglicht wird.

Zwecks radiale Wärmeabfuhr werden weitere wärmeleitende Distanzelemente 50, 51 und 52 eingesetzt, wie sie im Zusammenhang mit der FIG 4 oben bereits angesprochen und erläutert worden sind.

Auch die Aufnahmeeinrichtung 30 gemäß FIG 6 ist mit Trennelementen 32 ausgestattet, durch die Aufnahmeabschnitte 31 zur individuellen Aufnahme der Leitungselemente 15 gebildet werden. Vorteilhaft ist es, wenn jedes Leitungselement 15 von jedem der anderen Leitungselemente 15 jeweils durch mindestens ein Trennelement 32 getrennt ist. Die FIG 7 zeigt die Wärmeleitkörper 310 und 311 nochmals individuell näher im Detail. Man erkennt die Trennelemente 32 zur Bildung der Aufnahmeabschnitte 31.

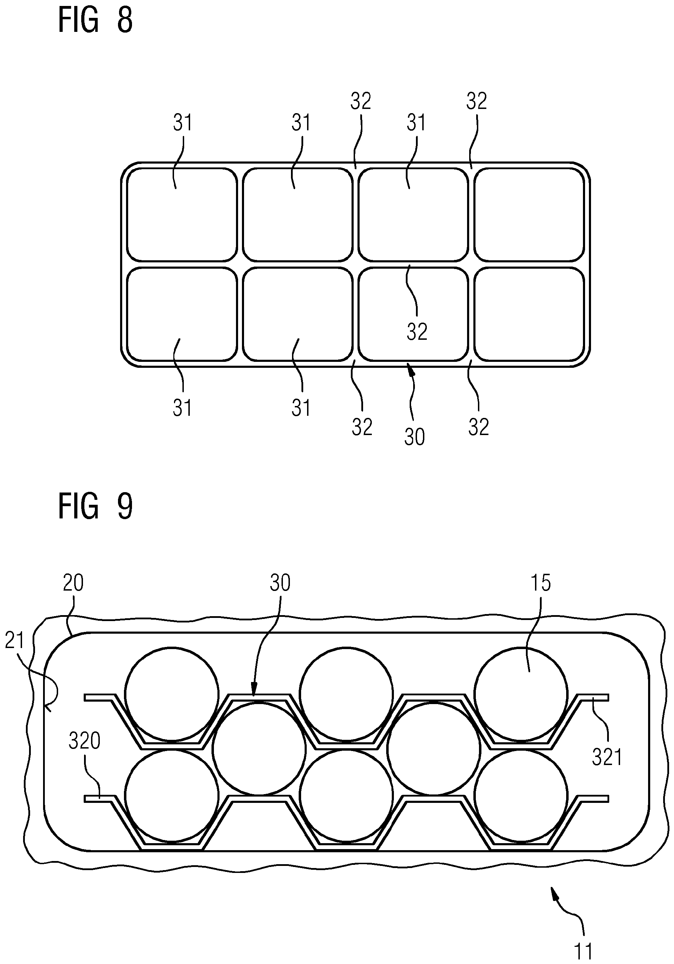

Die FIG 8 zeigt ein weiteres Ausführungsbeispiel für eine Aufnahmeeinrichtung 30, die in die Durchführung 20 des Querträgers 11 gemäß den Figuren 1 bis 3 eingesetzt werden kann. Die Aufnahmeeinrichtung 30 weist für Leitungselemente jeweils individuelle Aufnahmeabschnitte 31 auf, die voneinander durch Trennelemente 32 getrennt sind. Die wärmeleitenden Trennelemente 32 ermöglichen eine radiale Wärmeabfuhr nach außen, wie dies bereits oben im Zusammenhang mit den Figuren 1 bis 7 erläutert worden ist.

In den Figuren 9 bis 11 werden Ausführungsbeispiele für Aufnahmeeinrichtungen 30 gezeigt, die wellplattenähnliche Wärmeleitkörper mit wannenartigen Aufnahmeabschnitten aufweisen.

Bei der Ausführungsvariante gemäß FIG 9 wird die Aufnahmeeinrichtung 30 durch zwei Wärmeleitkörper 320 und 321 gebildet, die durch Wellbleche oder aus Wellplatten aus Metall gebildet sind. Der in der FIG 9 untere Wärmeleitkörper 320 liegt auf der Innenwand 21 der Durchführung 20 auf und ermöglicht somit eine radiale Wärmeabfuhr.

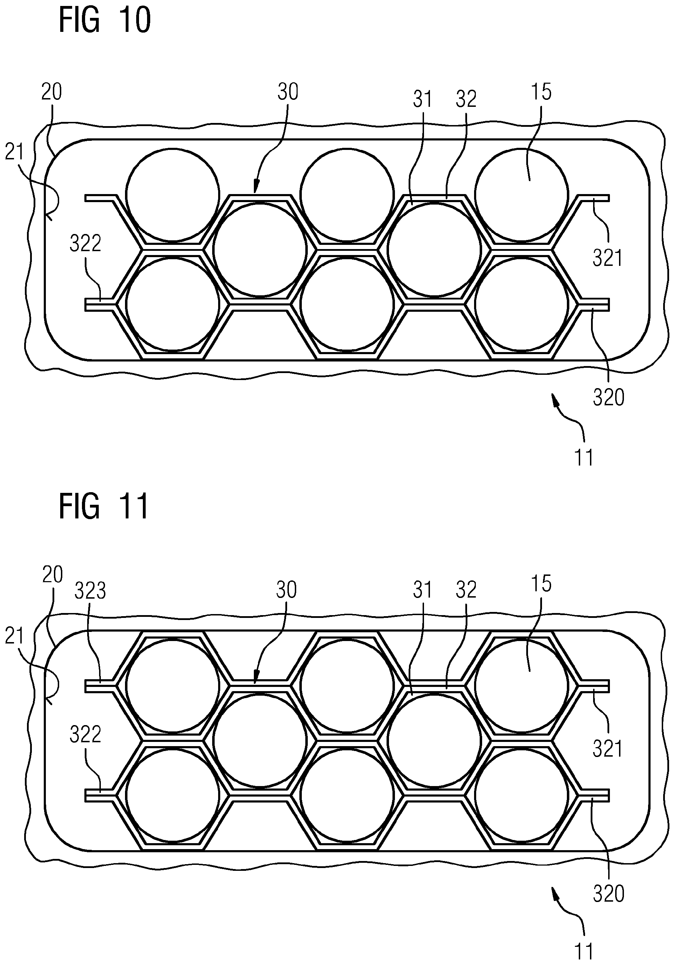

Bei der Ausführungsvariante gemäß FIG 10 wird die Aufnahmeeinrichtung 30 durch drei Wärmeleitkörper 320, 321 und 322 in Form von Wellplatten aus Metall bzw. Wellblechen gebildet. Jedes Leitungselement 15 bzw. jeder Aufnahmeabschnitt 31 der Aufnahmeeinrichtung 30 wird jeweils durch mindestens ein Trennelement 32 von einem anderen Aufnahmeabschnitt bzw. einem anderen Leitungselement getrennt.

Bei der Ausführungsvariante gemäß FIG 11 wird die Aufnahmeeinrichtung 30 durch vier Wärmeleitkörper 320, 321, 322 und 323 in Form von Wellplatten aus Metall gebildet. Es erfolgt eine radiale Wärmeabfuhr nach außen sowohl vertikal nach unten als auch vertikal nach oben, da die Aufnahmeeinrichtung 30 mit der Innenwand 21 sowohl unten als auch oben thermisch gekoppelt ist.

Die im Zusammenhang mit den Figuren 4 bis 11 erläuterten Ausführungsbeispiele für Aufnahmeeinrichtungen 30 weisen gemäß den Ansprüchen folgenden Merkmale oder Eigenschaften auf:
- Die Breite und Anzahl der wannenartigen Aufnahmeabschnitte 31, die Ausgestaltung der seitlichen Begrenzungen und die Länge der Wärmeleitkörper lassen sich an die jeweiligen Einbauverhältnisse wie beispielsweise die Anzahl und Dicke der aufzunehmenden Leitungen bzw. Kabel und den zur Verfügung stehenden Bauraum anpassen.
- Vorgefertigte Profile, vorzugsweise Strangpressprofile, können als Aufnahmeeinrichtungen oder als Wärmeleitkörper für Aufnahmeeinrichtungen eingesetzt werden und beispielsweise durch Sägen oder Abfräsen an die jeweilige Durchführung 20, also den jeweiligen Einsatzort adaptiert werden.
- Zusätzliche Metallkörper werden als Distanzstücke zur Wärmekopplung bzw. besserer Wärmeleitung zwischen den Wärmeleitkörpern und der Durchführung eingesetzt, um die radiale Wärmeabfuhr zu verbessern.
- Die Wärmeleitkörper können je nach Anzahl der Leitungen bzw. Kabel, je nach dem zur Verfügung stehenden Bauraum und je nach der abzuführenden Wärme verschiedenartig angeordnet werden.
- Die einzelnen Wärmeleitkörper können, beispielsweise in überkragenden Bereichen, miteinander mechanisch verbunden werden. Als Fügearten sind Verschraubungen, Klebungen, Formschlüsse (beispielsweise Nut und Feder) und Schweißen denkbar. Speziell an die Kabel und die Form des Querschnitts des Durchgangs angepasste Metallprofile sind als Wärmeleitkörper möglich.
- Ein optionales Merkmal der Wärmeleitkörper ist die Möglichkeit ihres Stapelns.
- Die Wärmeleitkörper lassen sich einzeln in die Durchführung legen. Anschließend können die Leitungen bzw. Kabel auf bzw. in die Wärmeleitkörper gelegt werden. Dann kann der Vorgang für die nächste Schicht wiederholt werden. Zusätzlich werden die Distanzstücke positioniert, um die Wärmeleitkörper zu fixieren und zusätzliche Wege für die Wärmeabfuhr zu ermöglichen.
- Dank wannenartiger Vertiefungen können die Wärmeleitkörper an den Leitungen bzw. Kabeln vormontiert werden. Dazu lassen sich beispielsweise die zuvor beschriebenen mechanischen Verbindungen der Wärmeleitkörper untereinander nutzen. Aber auch eine Vorfixierung mit Klebeband, das nach der Positionierung wieder entfernt wird, ist möglich.
- Wenn notwendig, lassen sich die Wärmeleitkörper in den Durchführungen durch mechanische Anschläge oder durch Klebung fixieren.

### Bezugszeichenliste

- 10: Schienenfahrzeug
- 11: Querträger
- 12: Wagenkasten
- 13: Drehgestell
- 15: Leitungselement
- 16: Abschnitt
- 17: Abschnitt
- 20: Durchführung
- 21: Innenwand
- 30: Einrichtung bzw. Aufnahmeeinrichtung
- 31: Aufnahmeabschnitt
- 32: Trennelemente
- 50: Distanzelement
- 51: Distanzelement
- 52: Distanzelement
- 301: Wärmeleitkörper
- 302: Wärmeleitkörper
- 310: Wärmeleitkörper
- 311: Wärmeleitkörper
- 320: Wärmeleitkörper
- 321: Wärmeleitkörper
- 322: Wärmeleitkörper
- 323: Wärmeleitkörper

- X: Fahrzeuglängsrichtung
- Y: Fahrzeugquerrichtung
- Z: vertikale Richtung

## Patentansprüche

1. Schienenfahrzeug (10), aufweisend zumindest ein Bauelement, welches als ein Querträger (11) ausgestaltet ist, der sich auf einem Drehgestell (13) des Schienenfahrzeugs (10) abstützt, und zumindest eine Durchführung (20) aufweist, wobei in der zumindest einen Durchführung (20) eine Einrichtung (30) zur Aufnahme von zumindest zwei Leitungselementen (15) angeordnet ist,
wobei die Einrichtung (30) zumindest ein Trennelement (32) aus einem wärmeleitenden Material zur Trennung der zumindest zwei Leitungselemente (15) voneinander und zumindest ein Distanzelement (50, 51, 52) aus einem wärmeleitenden Material für einen Wärmetransport von der Einrichtung (30) in das Bauelement aufweist, wobei das zumindest eine Distanzelement (50, 51, 52) zwischen der Einrichtung (30) und einer Innenwand der Durchführung (20) angeordnet ist, und wobei jedes Trennelement (32) wärmeleitend mit dem zumindest einen Distanzelement (50, 51, 52) gekoppelt ist.

2. Schienenfahrzeug (10) nach Anspruch 1, wobei
die Leitungselemente (15) elektrische Kabel mit jeweils zumindest einem elektrischen Leiter sind.

3. Schienenfahrzeug (10) nach einem vorstehenden Anspruch, wobei
ein Leitungsbündel bestehend aus einer Mehrzahl Leitungselemente (15) durch die Durchführung (20) geführt ist, und jedes der Leitungselemente (15) des Leitungsbündels von jedem anderen Leitungselement (15) durch zumindest ein Trennelement (32) getrennt ist.

4. Schienenfahrzeug (10) nach Anspruch 1, wobei
die wärmeleitende Kopplung unmittelbar, mittelbar über zumindest ein anderes Trennelement (32), mittelbar über eine Außenwand der Einrichtung (30), oder mittelbar über eine Außenwand der Einrichtung (30) und zumindest ein anderes Trennelement (32) erfolgt.

5. Schienenfahrzeug (10) nach einem vorstehenden Anspruch, wobei die Einrichtung eine Mehrzahl Aufnahmeabschnitte (31) zur jeweiligen Aufnahme eines Leitungselements (15) aufweist, wobei ein Aufnahmeabschnitt (31) von jedem anderen Aufnahmeabschnitt (31) durch jeweils mindestens ein Trennelement (32) getrennt ist.

6. Schienenfahrzeug (10) nach einem vorstehenden Anspruch, wobei
die Einrichtung (30) ein Strangpressprofilelement ist, dessen Strangpressrichtung parallel zu einer Längsrichtung (X) der Durchführung (20) ausgerichtet ist, wobei das Strangpressprofilelement aus einem Metall, einer Metalllegierung oder einem metallhaltigen Material besteht.

7. Schienenfahrzeug (10) nach Anspruch 1, wobei
sich die Durchführung (20) in einer Längsrichtung (X) des Schienenfahrzeug (10) erstreckt, und
sich die durch die Durchführung (20) geführten Leitungselemente (15) von einem vor dem Drehgestell (13) befindlichen Abschnitt des Schienenfahrzeugs (10), insbesondere von einem vor dem Fahrgestell befindlichen Abschnitt einer Unterseite eines Wagenkastens (12) des Schienenfahrzeug (10), durch die Durchführung (20) in einen hinter dem Drehgestell (13) befindlichen Abschnitt des Schienenfahrzeugs (10), insbesondere in einen hinter dem Drehgestell (13) befindlichen Abschnitt der Unterseite des Wagenkastens (12), erstrecken.

## Claims

1. Rail vehicle (10), having at least one structural element that is embodied as a crossbar (11), which braces against a bogie (13) of the rail vehicle (10), and has at least one feed-through (20), wherein a facility (30) for accommodating at least two conductor elements (15) is arranged in the at least one feed-through (20),
wherein the facility (30) has at least one separating element (32) made of a thermally conductive material for separating the at least two conductor elements (15) from one another and at least one spacer element (50, 51, 52) made of a thermally conductive material for thermal transport from the facility (30) into the structural element, wherein the at least one spacer element (50, 51, 52) is arranged between the facility (30) and an inner wall of the feed-through (20), and wherein each separating element (32) is coupled to the at least one spacer element (50, 51, 52) in a thermally conductive manner.

2. Rail vehicle (10) according to claim 1, wherein
the conductor elements (15) are electrical cables with at least one electrical conductor in each case.

3. Rail vehicle (10) according to a preceding claim, wherein a bundle of conductors consisting of a plurality of conductor elements (15) is guided through the feed-through (20), and each of the conductor elements (15) of the bundle of conductors is separated from every other conductor element (15) by at least one separating element (32).

4. Rail vehicle (10) according to claim 1, wherein
the thermally conductive coupling takes place directly, indirectly via at least one other separating element (32), indirectly via an outer wall of the facility (30), or indirectly via an outer wall of the facility (30) and at least one other separating element (32).

5. Rail vehicle (10) according to a preceding claim,
wherein the facility has a plurality of accommodating sections (31) for accommodating a conductor element (15) in each case, wherein an accommodating section (31) is separated from every other accommodating section (31) by at least one separating element (32) in each case.

6. Rail vehicle (10) according to a preceding claim, wherein the facility (30) is an extruded profile element, of which the extrusion direction is oriented in parallel with a longitudinal direction (X) of the feed-through (20), wherein the extruded profile element consists of a metal, a metal alloy or a metal-containing material.

7. Rail vehicle (10) according to claim 1, wherein
the feed-through (20) extends in a longitudinal direction (X) of the rail vehicle (10), and
the conductor elements (15) guided through the feed-through (20) extend from a section of the rail vehicle (10) which is located in front of the bogie (13), in particular from a section of a lower side of a car body (12) of the rail vehicle (10) which is located in front of the bogie, through the feed-through (20), into a section of the rail vehicle (10) which is located behind the bogie (13), in particular into a section of the lower side of the car body (12) which is located behind the bogie (13).

## Revendications

1. Véhicule (10) ferroviaire, comportant au moins un élément de construction, qui est conformé en traverse (11) s'appuyant sur un boggie (13) du véhicule (10) ferroviaire et ayant au moins une traversée (20), dans lequel dans la au moins une traversée (20) est disposé un dispositif (30) de réception d'au moins deux éléments (15) de ligne,
dans lequel le dispositif (30) a au moins un élément (32) de séparation en un matériau conducteur de la chaleur pour séparer les uns des autres les au moins deux éléments (15) de ligne et au moins un élément (50, 51, 52) d'entretoisement en un matériau conducteur de la chaleur pour un transport de chaleur du dispositif (30) à l'élément de construction, dans lequel le au moins un élément (50, 51, 52) d'entretoisement est disposé entre le dispositif (30) et une paroi intérieure de la traversée (20) et dans lequel chaque élément (32) de séparation est accouplé à conduction de la chaleur au au moins un élément (50, 51, 52) d'entretoisement.

2. Véhicule (10) ferroviaire suivant la revendication 1, dans lequel
les éléments (15) de ligne sont des câbles électriques ayant chacun un conducteur électrique.

3. Véhicule (10) ferroviaire suivant une revendication précédente, dans lequel
un faisceau de lignes constitué d'une pluralité d'éléments (15) de ligne passe dans la traversée (20) et chacun des éléments (15) de ligne du faisceau de lignes est séparé de chaque autre élément (15) de ligne par au moins un élément (32) de séparation.

4. Véhicule (10) ferroviaire suivant la revendication 1, dans lequel
l'accouplement à conduction de la chaleur s'effectue directement, indirectement par au moins un autre élément (32) de séparation, indirectement par une paroi extérieure du dispositif (30) ou indirectement par une paroi extérieure du dispositif (30) et par au moins un autre élément (32) de séparation.

5. Véhicule (10) ferroviaire suivant une revendication précédente, dans lequel
le dispositif a une pluralité de parties (31) de réception pour la réception respective d'un élément (15) de ligne, dans lequel une partie (31) de réception est séparée de chaque autre partie (31) de réception par respectivement au moins un élément (32) de séparation.

6. Véhicule (10) ferroviaire suivant une revendication précédente, dans lequel
le dispositif (30) est un élément profilé filé à la presse, dont la direction de filage à la presse est parallèle à une direction (X) en longueur de la traversée (20), l'élément profilé filé à la presse étant en un métal, en un alliage métallique ou en un matériau contenant du métal.

7. Véhicule (10) ferroviaire suivant la revendication 1, dans lequel
la traversée (20) s'étend dans une direction (X) longitudinale du véhicule (10) ferroviaire et les éléments (15) de ligne passant dans la traversée (20) s'étendent d'une partie, se trouvant avant le boggie (13), du véhicule (10) ferroviaire, notamment d'une partie, se trouvant avant le train de roulement, d'un côté inférieur d'une caisse (12) du véhicule (10) ferroviaire à une partie, se trouvant derrière le boggie (13), du véhicule (10) ferroviaire, notamment à une partie, se trouvant derrière le boggie (13) du côté inférieur de la caisse (12), en passant dans la traversée (20).
